# EUROPÄISCHE PATENTSCHRIFT

(11) **EP 3 091 301 B1**
(45) Veröffentlichungstag und Bekanntmachung des Hinweises auf die Patenterteilung: **28.12.2022**
(21) Anmeldenummer: 15197190.0
(22) Anmeldetag: 01.12.2015
(51) Int. Cl.: F24F 13/14, F16K 1/22

(54) **ANORDNUNG FÜR DIE VOLUMENSTROMREGULIERUNG IN EINEM LUFTKANAL, IN DEM EIN DURCH LÜFTUNGSGERÄTE ODER DERGLEICHEN ERZEUGTER LUFTSTROM VORLIEGT**
ASSEMBLY FOR VOLUME FLOW REGULATION IN AN AIR CANAL, IN WHICH A FLOW OF AIR CREATED BY VENTILATION UNITS OR THE LIKE EXISTS
AGENCEMENT POUR LA REGULATION DU DEBIT D'UN CANAL D'AIR DANS LEQUEL UN DEBIT D'AIR EST GENERE PAR DES APPAREILS DE VENTILATION OU SIMILAIRE

(30) Priorität: 25.03.2015 DE 102015104520
(43) Veröffentlichungstag der Anmeldung: 09.11.2016
(73) Patentinhaber: Naber Holding GmbH & Co. KG, 48529 Nordhorn (DE)
(72) Erfinder: Friebel, Lennart Simon, 49134 Wallenhorst (DE); Naber, Hans-Joachim, 48527 Nordhorn (DE)
(74) Vertreter: Angerhausen, Christoph

(56) Entgegenhaltungen:
- CN-U- 203 500 511
- DE-T2- 69 104 267
- FR-A1- 2 337 840
- US-A- 5 245 956

## Beschreibung

Die Erfindung betrifft eine Anordnung für die Volumenstromregulierung in einem Luftkanal, in dem ein durch Lüftungsgeräte oder dergleichen erzeugter Luftstrom vorliegt, wobei die Anordnung einen Kanal und mindestens ein in dem Kanal angeordnetes Verschlusselement aufweist. Das Verschlusselement weist mindestens ein Klappenpaar auf, das in Fluidströmungsrichtung durch den Kanal hinter einem sich durch den Kanalquerschnitt erstreckenden Steg zwischen einer Offenstellung, in der es den Kanalquerschnitt zumindest anteilig freigibt, und einer Schließstellung, in der es den Kanal verschließt, um eine Schwenkachse verschwenkbar gelagert ist. Derartige Anordnungen kommen insbesondere bei der Gebäudebe- und/oder -entlüftung zum Einsatz. Eine Anordnung für die Volumenstromregulierung ist aus der CN 203500511 U bekannt. Ähnliche Anordnungen sind außerdem bekannt aus der FR 2 337 840 A1, der US 5,245,956 oder der DE 69 104 267 T2. Die US 5,245,956 zeigt eine Anordnung mit den Merkmalen des Oberbegriffs von Anspruch 1.

Aus der DE 20 2010 003 340 U1 ist eine Lüftungsklappe zum Verschließen eines Luftkanals, einer Lüftungsleitung oder dergleichen benannt, an welche Ventilatoren oder sonstige Lüftungsgeräte angeschlossen werden können. Ein Magnet am Klappengehäuse der Lüftungsklappe soll die Lüftungsklappe sicher verschließen und ungewolltes Öffnen sowie Geräuschentwicklung verhindern, wenn kein durch Lüftungsgeräte oder dergleichen erzeugter Luftstrom vorliegt. Die beschriebene Vorrichtung hat den Nachteil, dass sie nur für Einzelklappenverschlüsse geeignet ist und darüber hinaus ein vergleichsweise hoher Klappenöffnungsdruck erforderlich ist, um beim Einsetzen eines Luftstroms die Klappe aus der Schließstellung zu bewegen.

Aus der EP 2 597 391 A1 ist darüber hinaus ein Mauerkasten bekannt, bei dem ein Verschlussdeckel gegenüber einem Führungsrohr zwischen einer Offenstellung und einer Schließstellung linear verstellbar ist. In der Schließstellung verschließt die Abdeckung eine Lüftungsöffnung des Führungsrohrs und ist durch Magnete in dieser Position gehalten, so dass die Abdeckung sich nur dann aus der Schließstellung bewegt, wenn ein die Magnethaltekraft übersteigender Rohrinnendruck vorliegt.

Bei Verschlussanordnungen, bei denen das Verschlusselement aus einem Klappenpaar gebildet ist, wie sie die DE 10 2014 113 210 A1 beschreibt, ist es vorgesehen, dass die beiden Klappen des Klappenpaares über eine Schenkelfeder in die Schließstellung vorgespannt sind, so dass bei einsetzendem Volumenstrom die Klappen entgegen des progressiven Kennlinienverlaufs der Schenkelfeder vorgespannt werden müssen, was einen entsprechenden Druckverlust im Kanal zur Folge hat.

Es ist daher die Aufgabe der Erfindung, eine Anordnung der eingangs beschriebenen Art vorzuschlagen, die die zuverlässige Volumenstromregulierung in einem Fluidkanal ermöglicht.

Diese Aufgabe wird erfindungsgemäß durch eine Anordnung mit den Merkmalen des Anspruchs 1 gelöst. Die abhängigen Ansprüche betreffen jeweils vorteilhafte Ausführungsformen der Erfindung.

Demgemäß weist der Steg mindestens ein erstes magnetisches Element auf, wobei die Klappen des Klappenpaares jeweils mindestens ein zweites magnetisches Element aufweisen, das mit dem ersten magnetischen Element magnetisch gekoppelt ist. Das erste und das zweite magnetische Element können beispielsweise ein Permanentmagnet, ein Paramagnet, oder ein Elektromagnet, insbesondere ein Elektromagnet mit einstellbarer Magnetfeldstärke, sein. Es kann ein natürliches magnetisches Moment aufweisen, oder ein induziertes magnetisches Moment. Beispielsweise kann eines der beiden magnetischen Elemente ein Permanentmagnet oder ein Elektromagnet und das andere ein Paramagnet sein, der erst bei induktiver Wechselwirkung mit dem ersten magnetischen Element ein magnetisches Dipolmoment erhält.

Die Anziehungskraft zwischen den magnetischen Elementen und dementsprechend das auf die Klappen wirkende Schließmoment ist bei geschlossenen Klappen maximal, da in dieser Position die magnetischen Elemente den geringsten Abstand aufweisen. Durch das Öffnen der Klappen vergrößert sich der Abstand der ersten und zweiten magnetischen Elemente zueinander, was zu einem starken, nichtlinearen Abfall der Magnetkraft und damit auch des Schließmoments führt. Verstärkt wird dieser Effekt dadurch, dass durch das Öffnen der Klappen die Ausrichtung der ersten und zweiten magnetischen Elemente zueinander verändert wird. Beispielsweise kann sich die Ausrichtung der magnetischen Elemente von planparallel in der Schließstellung hin zu senkrechter Ausrichtung in der Offenstellung verändern.

Ein weiterer Effekt besteht darin, dass sich bei geöffneter Klappe der Abstand der Magnetkraft-Wirkungslinie zur Drehachse der Klappen verringert. Dies führt zu einer weiteren Reduzierung des Schließmomentes. Damit lässt sich durch geeignete Wahl der verschiedenen Parameter wie Magnettyp, Magnetstärke, Anfangsabstand, Permeabilität des Mediums zwischen den Magneten nahezu jede gewünschte Kennlinie des Klappenschließmoments realisieren.

Durch die Einstellung der gewünschten Magnetparameter lässt sich der erforderliche Öffnungsdruck individuell den Einbaugegebenheiten (Ausgleich von dynamischen Druckdifferenzen; Ausgleich von baulich bedingter Neigung des Kanals) anpassen. Daher könnte eine variable Einstellung der Parameter erforderlich sein. Auch eine automatische Einstellung zum Ausgleich der Druckdynamik ist denkbar (beispielsweise über einen Elektromagnet).

Ein Fluid im Sinne der Erfindung kann insbesondere ein Gas, eine Flüssigkeit oder ein Gas-Flüssigkeits-Gemisch sein. Die beschriebene Anordnung eignet sich insbesondere für die Volumenstromregulierung eines Abluftkanals, etwa für den Abtransport von Wrasen einer Dunstabzugshaube.

Es kann vorgesehen sein, dass das erste und das zweite magnetische Element so zueinander angeordnet sind, dass sie in der Schließstellung zumindest anteilig überlappen.

Weiterhin können das erste und das zweite magnetische Element in der Schließstellung einen Minimalabstand einnehmen, wobei das zweite magnetische Element beim Verschwenken des Verschlusselements aus der Schließstellung in die Offenstellung auf einer Kreisbahn um die Schwenkachse geführt ist, so dass das zweite magnetische Element in der Offenstellung einen Maximalabstand zu dem ersten magnetischen Element aufweist.

In dem Fall, dass der Kanal das mindestens eine erste magnetische Element aufweist, kann dieses am Innen- oder am Außenumfang des Kanals angeordnet sein. Eine solche Anordnung fällt jedoch nicht unter den Schutzbereich der Ansprüche.

Wenn das erste magnetische Element am Außenumfang des Kanals angeordnet ist, kann vorgesehen sein, dass eine Schwenkachse mindestens einer Klappe des Klappenpaares durch eine Wandung des Kanals hindurchgeführt ist, wobei die Schwenkachse außerhalb des Außenumfangs des Kanals unter einem Abstand mit dem zweiten magnetischen Element verbunden ist. Bei dieser Variante ist somit die komplette Magnetanordnung aus erstem und zweitem magnetischem Element außerhalb des Rohrinnenquerschnitts angeordnet, wodurch der von dem Verschlusselement verursachte Druckverlust weiter verringert wird. In dem Fall würde die zweite Klappe, deren Achse nicht auf den Außenumfang geführt ist, an die erste Klappe gekoppelt beweglich sein. Eine bevorzugte Umsetzungsform könnte über einer Verzahnung der beiden Achsen erfolgen.

Die bevorzugte Querschnittsform ist kreisförmig; wobei auch ein ovaler, quadratischer oder rechteckiger Querschnitt möglich ist.

Es kann vorgesehen sein, dass der Abstand des mindestens einen ersten magnetischen Elements zu der Schwenkachse viel kleiner als eine Abmessung der Klappen senkrecht zur Schwenkachse ist, wobei der Abstand vorzugsweise weniger als ein Fünftel und besonders bevorzugt weniger als ein Zehntel der Abmessung der Klappen beträgt. Durch die Verringerung des Abstandes zur Drehachse kann das Schließmoment verkleinert werden. Daher ist auch eine Ausführungsform mit variabler Einstellung des Schließmomentes über den Achsabstand denkbar. Die kann bei einer Ausführungsform mit Hilfe von in verschieblichen Schlitten gelagerten magnetischen Elementes realisiert sein.

Der Steg kann an gegenüberliegenden Seiten beabstandet von der Schwenkachse jeweils mindestens ein erstes magnetisches Element aufweisen, wobei beide Klappen des Klappenpaares jeweils mindestens eines der zweiten magnetischen Elemente aufweisen. Dabei können die an gegenüberliegenden Seiten des Stegs beabstandet von der Schwenkachse angeordneten ersten magnetischen Elemente weiter in Steglängsrichtung voneinander beabstandet, vorzugsweise vertikal voneinander beabstandet sein.

Die beiden Klappen des Klappenpaares können um eine gemeinsame Schwenkachse oder über getrennte, parallel beabstandete Schwenkachsen verschwenkbar sein.

Der Steg oder der Kanal können einen Anschlag aufweisen, an dem mindestens eine der Klappen des Klappenpaares in der Offenstellung anliegt, so dass das erste und das zweite magnetische Element in der Offenstellung in einem vorgegebenen Abstand zueinander angeordnet sind. Der Anschlag kann beispielsweise am Innenumfang des Kanals angeordnet sein.

Es kann weiterhin vorgesehen sein, dass das erste und das zweite magnetische Element jeweils ein magnetisches Element mit einer Magnetfeldausrichtung aufweisen, wobei die beiden Magnetfeldausrichtungen in der Schließstellung im Wesentlichen parallel zueinander ausgerichtet sind, so dass die Magnetfeldausrichtungen in der Offenstellung einen einem Verstellwinkel von der Schließstellung in die Offenstellung entsprechenden Winkel einschließen.

Darüber hinaus kann der Steg an einer ersten Längsseite, welche bei vorhandener Fluidströmung angeströmt ist, eine fluiddynamisch optimierte Kontur aufweisen, wobei die Schwenkachse, um die die Klappen verschwenkbar sind, an einer der ersten Längsseite gegenüberliegenden, im Strömungsschatten des Stegs liegenden zweiten Längsseite angeordnet ist.

Wenn die ersten und/oder die zweiten magnetischen Elemente als Elektromagnete ausgebildet sind, bietet dies die Möglichkeit, die Rückstellmomente der Klappen des Klappenpaares einzustellen und damit den Volumenstrom durch den Kanal zu regeln. Für die Bestimmung des Volumenstroms ist dann folglich lediglich die Messung der Magnetkraft und die Bestimmung der Differenz zwischen dem Kanalinnendruck vor dem Verschlusselement und hinter dem Verschlusselement erforderlich. Aus der Magnetkraft können dann der Öffnungswinkel und damit auch der Druckverlustbeiwert (Zeta-Wert) der Klappen bestimmt werden. Mit einer vorher aufgenommenen Kalibrierungskurve kann dann mit einer Regelelektronik aus dem Zeta-Wert der Klappen und der Druckdifferenz vor und hinter dem Verschlusselement der Volumenstrom in der Rohrleitung berechnet und durch Ändern der Magnetkraft entsprechend geregelt werden. Die elektrischen Leitungen für die Ansteuerung der Elektromagnete können durch den Steg geführt sein.

Es kann daher vorgesehen sein, dass mindestens das erste magnetische Element einen Elektromagnet mit einstellbarer Magnetfeldstärke aufweist, wobei die Anordnung weiterhin eine Mess- und Regeleinheit aufweist, die in Abhängigkeit einer Magnetanziehungskraft zwischen dem ersten und dem zweiten Elektromagnet und eines von dem Verschlusselement verursachten Druckverlustes den Volumenstrom durch den Kanal bestimmt.

Weiterhin kann die Mess- und Regeleinheit darauf ausgelegt sein, durch Variation der Magnetfeldstärke die Magnetanziehungskraft und damit den Stellwinkel der Klappen so einzustellen, dass sich bei gegebenem Druckverlust ein vorgegebener Volumenstrom einstellt. Darüber hinaus kann die Mess- und Regeleinheit darauf ausgelegt sein, aus einem ersten Fluiddruck in Strömungsrichtung vor dem Verschlusselement und einem Fluiddruck in Strömungsrichtung hinter dem Verschlusselement durch Differenzbildung einen Druckverlust zu ermitteln. Die Mess- und Regeleinheit kann eine Datenbank aufweisen oder auf eine Datenbank zurückgreifen, in der Gerätekenndaten hinterlegt sind, über die ein Ansteuerstrom des Elektromagnets und ein gemessener Druckverlust in Relation mit dem sich ergebenden Volumenstrom gesetzt sind.

Weitere Einzelheiten der Erfindung werden anhand der nachstehenden Figuren erläutert. Dabei zeigt:
- Figur 1: in schematischer Darstellung eine Ausführungsform eines erfindungsgemäßen Verschlusselements in der Schließstellung der Klappen;
- Figur 2: in schematischer Darstellung die Ausführungsform gemäß Figur 1, wobei eine der Klappen in der Offenstellung und die andere in der Schließstellung angeordnet ist;
- Figur 3: in schematischer Darstellung eine Ausführungsform der erfindungsgemäßen Anordnung; und
- Figur 4: in schematischer Darstellung eine Anordnung, die nicht unter den Schutzbereich der Ansprüche fällt.

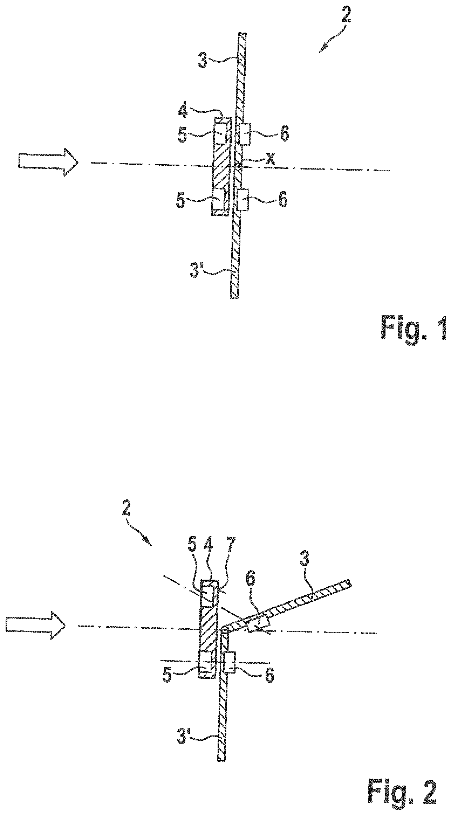

In den Figuren 1 und 2 ist das für die Realisierung einer erfindungsgemäßen Anordnung wesentliche Verschlusselement 2 schematisch dargestellt. Das Verschlusselement 2 besteht im Wesentlichen aus einem Klappenpaar 3, 3', welches um eine gemeinsame Schwenkachse x aus der in Figur 1 dargestellten Schließstellung aufeinander zu in eine Offenstellung verklappt werden kann. Statt einer gemeinsamen Schwenkachse x können die Klappen 3, 3' auch über separate, parallel voneinander beabstandete Schwenkachsen gelagert sein.

Die Schwenkachse x ist in der durch den Pfeil angedeuteten Fluidströmungsrichtung dem Steg 4 unmittelbar nachgelagert angeordnet. Die Schwenkachse x kann unmittelbar an dem Steg 4 ausgebildet sein oder unabhängig von diesem unter einem Abstand, wie in Figur 1 und 2 dargestellt. Die Schwenkachse x befindet sich im Windschatten des Steges 4. Der Steg 4 weist zwei erste magnetische Element 5 auf, wobei jedes der ersten Elemente 5 einem der zweiten Elemente 6 zugeordnet ist. Die ersten und die zweiten Elemente 5, 6 sind unter einem Abstand zu der Schwenkachse x angeordnet. Dieser Abstand der ersten und zweiten Elemente 5, 6 zu der Schwenkachse x ist derart bemessen, dass er sehr viel kleiner als eine Abmessung der Klappen 3, 3' senkrecht zu der Schwenkachse x ist. Beispielsweise kann der Abstand der Elemente 5, 6 von der Schwenkachse x kleiner als ein Fünftel der Abmessung der Klappen 3, 3' senkrecht zu der Schwenkachse x betragen.

Um eine gegenseitige Beeinflussung der Magnetpaare 5, 6 zu vermeiden, können die Magnetpaare 5, 6 versetzt, beispielsweise jeweils an den gegenüberliegenden Enden des Steges 4 angeordnet sein.

Die Anziehungskraft der magnetischen Elemente 5, 6 bewirkt bei geschlossenen Klappen 3, 3' das maximale Schließmoment, da in dieser Stellposition die Elemente 5, 6 den geringsten Abstand aufweisen. Durch das Öffnen der Klappen 3, 3' vergrößert sich der Abstand der Elemente 5, 6 zueinander, was zu einem starken, nichtlinearen Abfall der Magnetanziehungskraft und damit auch des Schließmoments führt. Verstärkt wird dieser Effekt noch dadurch, dass durch das Öffnen der Klappen 3, 3' die Ausrichtung der magnetischen Elemente 5, 6 verändert wird, beispielsweise von planparallel hin zu senkrechter Ausrichtung. Ein weiterer Effekt besteht darin, dass sich bei geöffneter Klappe 3, 3' der Abstand der Magnetanziehungskraft-Wirkungslinic (in Fig. 2 durch die durch die Magnetpaare 5, 6 hindurchtretenden Strichpunktlinien angedeutet) zur Schwenkachse x der Klappen 3, 3' verringert. Dies führt zu einer weiteren Reduzierung des Schließmoments. Es lässt sich somit durch geeignete Wahl des Magnettyps, der Magnetstärke, des Anfangsabstands in der Schließstellung, der Permeabilität des Mediums zwischen den Magneten, usw. nahezu jede gewünschte Kennlinie des Klappen-Schließmoments realisieren.

Insbesondere ist das Schließmoment bei der dargestellten Ausführungsform bei weit geöffneter Klappe 3, 3' um ein Vielfaches kleiner als bei einer vergleichbaren Rückstauklappe aus dem Stand der Technik, bei der die Klappen über eine Schenkelfeder mit identischem Anfangs-Schließmoment vorgespannt sind. Bei gleichem Volumenstrom öffnet sich das Verschlusselement 2 der erfindungsgemäßen Anordnung daher deutlich weiter als bei einer herkömmlichen, federbetätigten Rückstauklappe. Im Gegensatz zu dem progressiven Kennlinienverlauf einer Schenkelfeder weist der beschriebene magnetische Antrieb der Klappen eine degressive Kennlinie auf.

Der Steg 4 kann weiterhin die Funktion aufweisen, einen Anschlag 7 bereitzustellen, an dem die Klappen 3, 3' in der Offenstellung des Verschlusselements 2 anliegen und somit eine definierte Ausrichtung einnehmen.

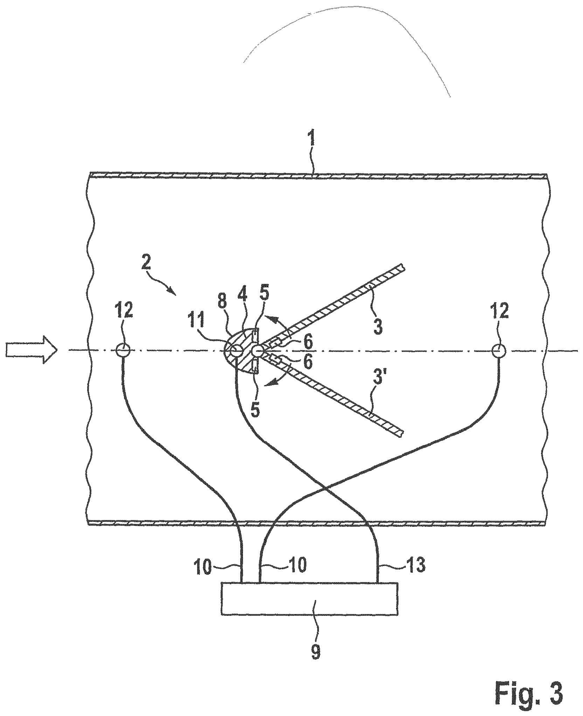

Bei der in Figur 3 gezeigten Ausführungsform weist der Steg 4 an der Längsseite, welche von dem Volumenstrom angeströmt wird, eine fluiddynamisch optimierte Kontur 8 auf, so dass die ersten magnetischen Elemente 5 und die zweiten magnetischen Elemente 6 im Windschatten des Steges 4 angeordnet sind.

Die ersten magnetischen Elemente 5 sind als Elektromagnete ausgebildet, die über eine Mess- und Regeleinheit 9 ansteuerbar sind. Dazu ist die Mess- und Regeleinheit 9 über eine Stromleitung 13, die durch einen sich in Längsrichtung des Stegs 4 erstreckenden Kabelkanal geführt ist, mit den ersten Elektromagneten 5 elektrisch verbunden. Weiterhin ist die Mess- und Regeleinheit 9 darauf ausgelegt, die von dem Verschlusselement 2 verursachte Druckdifferenz zu bestimmen. Dazu ist in Fluidströmungsrichtung vor dem Verschlusselement 2 und hinter dem Verschlusselement 2 jeweils ein Drucksensor 12 angeordnet, der ein entsprechendes Drucksignal an die Mess- und Regeleinheit 9 ausgibt. Alternativ können die Drucksensoren auch Bestandteil der Mess- und Regeleinheit 9 sein, wobei dann die Mess- und Regeleinheit 9 zwei Druckleitungen 10 aufweist, von denen eine den Kanalinnendruck in Fluidströmungsrichtung vor dem Verschlusselement 2 und die andere den Kanalinnendruck in Fluidströmungsrichtung hinter dem Verschlusselement 2 abnimmt.

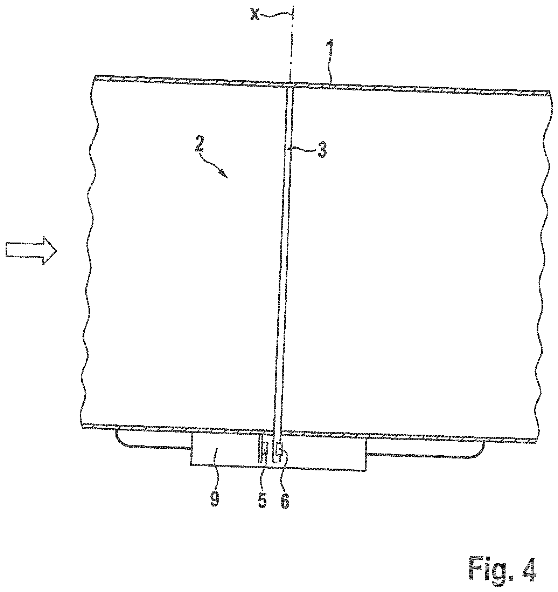

Die Figur 4 zeigt eine Anordnung, bei der die ersten und die zweiten magnetischen Elemente 5, 6 außerhalb des Innenquerschnitts des Kanals 1 angeordnet sind und einen Bestandteil einer Mess- und Regeleinheit 9 bilden, die auf dem Außenumfang des Kanals angeordnet ist. Es kann dazu beispielsweise vorgesehen sein, dass die Schwenkachse x der Klappen 3, 3' über eine Drehdurchführung durch den Außenumfang des Kanals 1 in die Mess- und Regeleinheit 9 durchgeführt ist, wobei in der Mess- und Regeleinheit 9 das zweite magnetische Element 6 unter einem Abstand zu der Schwenkachse x mit der Schwenkachse x verbunden ist. Die Anordnung, gemäß Figur 4 hat den Vorteil, dass die Verwendung eines Stegs, welcher sich durch den Innenquerschnitt des Kanals 1 erstreckt, entbehrlich ist, so dass sich eine weitere Verringerung des verschlusselementsbedingten Druckverlustes innerhalb des Kanals 1 realisiert werden kann.

Darüber hinaus können die Klappen 3, 3' eine strömungsoptimierte Kontur aufweisen, welche ebenfalls darauf ausgelegt ist, den verschlusselementsbedingten Druckverlust zu verringern. Bei der Verwendung von Permanentmagneten als erste und der zweite magnetische Elemente 5, 6 ist es weiterhin möglich, den Klappen-Öffnungsdruck durch Variation des Abstandes Magnete zueinander auf einen gewünschten Wert einzustellen. Es ist weiterhin nicht zwingend erforderlich, dass bei geschlossenen Klappen 3, 3' die Magnetpaare 5, 6 planparallel angeordnet sind. Vielmehr ist es hinreichend, dass diese ausreichend wirkgekoppelt sind, was beispielsweise auch durch eine überlappende Anordnung der magnetischen Elemente 5, 6 erreichet werden kann. Darüber hinaus ist es zweckmäßig, die beiden Paare magnetischer Elemente 5, 6 in einer Weise zueinander anzuordnen, dass sie sich im Wesentlichen nicht gegenseitig magnetisch beeinflussen. Dies kann beispielsweise dadurch erfolgen, dass die beiden dem Steg 4 zugeordneten ersten magnetischen Elemente 5 an den gegenüberliegenden Enden des Steges 4 angeordnet sind und dementsprechend die zugeordneten zweiten magnetischen Elemente 6 an gegenüber liegenden Enden der Klappen 3, 3'.

Wenn die Klappen 3, 3' als Hohlklappen ausgebildet sind, beispielsweise um eine verbesserte Wärmedämmung aufzuweisen, können die zweiten magnetischen Elemente 6 in einem Hohlraum innerhalb der Klappen aufgenommen sein. Wie es in der nachveröffentlichten DE 10 2014 113 210 A1 beschrieben ist, können auch mehrere der erfindungsgemäßen Verschlusselemente 2 in dem Kanal hintereinander angeordnet sein, um in der Schließstellung zwischen sich einen wärmedämmenden Hohlraum auszubilden.

### Bezugszeichenliste

- 1: Kanal
- 2: Verschlusselement
- 3,3': Klappenpaar
- 4: Steg
- 5: Erstes magnetisches Element
- 6: Zweites magnetisches Element
- 7: Anschlag
- 8: Kontur
- 9: Mess- und Regeleinheit
- 10: Druckleitung
- 11: Kabelkanal
- 12: Drucksensor/Druckleitungsöffnung
- 13: Stromleitung
- x: Schwenkachse

## Patentansprüche

1. Anordnung für die Volumenstromregulierung in einem Luftkanal, in dem ein durch Lüftungsgeräte oder dergleichen erzeugter Luftstrom vorliegt, wobei die Anordnung einen Kanal (1) und mindestens ein in dem Kanal (1) angeordnetes Verschlusselement (2) aufweist, wobei das Verschlusselement (2) mindestens ein Klappenpaar (3, 3') aufweist, das in Fluidströmungsrichtung durch den Kanal (1) hinter einem sich durch den Kanalquerschnitt erstreckenden Steg (4) zwischen einer Offenstellung, in der es den Kanalquerschnitt zumindest anteilig freigibt, und einer Schließstellung, in der es den Kanal (1) verschließt, um eine Schwenkachse (x) verschwenkbar gelagert ist, **dadurch gekennzeichnet, dass** der Steg (4) mindestens ein erstes magnetisches Element (5) aufweist, wobei die Klappen des Klappenpaares (3, 3') jeweils mindestens ein zweites magnetisches Element (6) aufweisen, das mit dem ersten magnetischen Element (5) magnetisch gekoppelt ist.

2. Anordnung nach Anspruch 1, bei der das erste und das zweite magnetische Element (5, 6) so zueinander angeordnet sind, dass sie in der Schließstellung zumindest anteilig überlappen.

3. Anordnung nach einem der vorangegangenen Ansprüche, bei der das erste und das zweite magnetische Element (5, 6) in der Schließstellung einen Minimalabstand einnehmen, wobei das zweite magnetische Element (6) beim Verschwenken des Verschlusselements (2) aus der Schließstellung in die Offenstellung auf einer Kreisbahn um die Schwenkachse (x) geführt ist, so dass das zweite magnetische Element (6) in der Offenstellung einen Maximalabstand zu dem ersten magnetischen Element (5) aufweist.

4. Anordnung nach einem der vorangegangenen Ansprüche, bei der der Abstand des mindestens einen ersten magnetischen Elements (5) zu der Schwenkachse (x) viel kleiner als eine Abmessung der Klappen (3, 3') senkrecht zur Schwenkachse (x) ist, wobei der Abstand vorzugsweise weniger als ein Fünftel und besonders bevorzugt weniger als ein Zehntel der Abmessung der Klappen (3, 3') beträgt.

5. Anordnung nach einem der vorangegangenen Ansprüche, bei der der Steg (4) an gegenüber liegenden Seiten beabstandet von der Schwenkachse (x) jeweils mindestens das erste magnetische Element (5) aufweist, wobei beide Klappen des Klappenpaares (3, 3') jeweils mindestens eins der zweiten magnetischen Elemente (6) aufweisen.

6. Anordnung nach Anspruch 5, bei der die an gegenüber liegenden Seiten des Stegs (4) beabstandet von der Schwenkachse (x) angeordneten ersten magnetischen Elemente (5) weiterhin in Steglängsrichtung voneinander beabstandet sind, vorzugsweise vertikal voneinander beabstandet sind.

7. Anordnung nach einem der vorangegangenen Ansprüche, bei der die beiden Klappen des Klappenpaares (3, 3') um eine gemeinsame Schwenkachse (x) oder über getrennte, parallel beabstandete Schwenkachsen (x) verschwenkbar sind.

8. Anordnung nach einem der vorangegangenen Ansprüche, bei der der Steg (4) oder der Kanal (1) einen Anschlag (7) aufweist, an dem mindestens eine der Klappen des Klappenpaares (3, 3') in der Offenstellung anliegt, so dass das erste und das zweite magnetische Element (5, 6) in der Offenstellung in einem vorgegebenen Abstand zueinander angeordnet sind.

9. Anordnung nach einem der vorangegangenen Ansprüche, bei der das erste und/oder das zweite magnetische Element (5, 6) einen Permanentmagnet oder einen Elektromagnet mit einstellbarer Magnetfeldstärke aufweist.

10. Anordnung nach einem der vorangegangenen Ansprüche, bei der das erste und das zweite magnetische Element (5, 6) jeweils ein magnetisches Element mit einer Magnetfeldausrichtung aufweisen, wobei die beiden Magnetfeldausrichtungen in der Schließstellung im Wesentlichen parallel zueinander ausgerichtet sind, so dass die Magnetfeldausrichtungen in der Offenstellung einen einem Verstellwinkel von der Schließstellung in die Offenstellung entsprechenden Winkel einschließen.

11. Anordnung nach einem der vorangegangenen Ansprüche, bei der der Steg (4) an einer ersten Längsseite, welche bei vorhandener Fluidströmung angeströmt ist, eine fluiddynamisch optimierte Kontur (8) aufweist, wobei die Schwenkachse (x), um die die Klappen (3, 3') verschwenkbar sind, an einer der ersten Längsseite gegenüber liegenden, im Strömungsschatten des Stegs (4) liegenden zweiten Längsseite angeordnet ist.

12. Anordnung nach einem der vorangegangenen Ansprüche, bei der mindestens das erste magnetische Element (5) einen Elektromagnet mit einstellbarer Magnetfeldstärke aufweist, wobei die Anordnung weiterhin eine Mess- und Regeleinheit (9) aufweist, die in Abhängigkeit einer Magnetkraft zwischen dem ersten und dem zweiten Elektromagnet (6) und eines von dem Verschlusselement (2) verursachten Druckverlustes den Volumenstrom durch den Kanal (1) bestimmt.

13. Anordnung nach Anspruch 12 , bei der die Mess- und Regeleinheit (9) darauf ausgelegt ist, durch Variation der Magnetfeldstärke die Magnetkraft und damit den Stellwinkel der Klappen (3, 3') so einzustellen, dass sich bei gegebenem Druckverlust ein vorgegebener Volumenstrom einstellt.

14. Anordnung nach Anspruch 12 oder 13 bei der die Mess- und Regeleinheit (9) darauf ausgelegt ist, aus einem ersten Fluiddruck in Strömungsrichtung vor dem mindestens einen Verschlusselement (2) und einem zweiten Fluiddruck in Strömungsrichtung hinter dem mindestens einen Verschlusselement (2) durch Differenzbildung den Druckverlust zu ermitteln.

## Claims

1. An assembly for volume flow regulation in an air duct in which a flow of air is generated by ventilation devices or the like, the assembly having a duct (1) and at least one closure element (2) arranged in the duct (1), the closure element (2) having at least one pair of flaps (3, 3') which, in the direction of fluid flow through the duct (1), is mounted behind a web (4) extending through the duct cross section so as to be pivotable about a pivot axis (x) between an open position, in which it opens the duct cross section at least partially, and a closed position, in which it closes the duct (1), **characterized in that** the web (4) has at least one first magnetic element (5), the flaps of the pair of flaps (3, 3') each having at least one second magnetic element (6) which is magnetically coupled to the first magnetic element (5).

2. The assembly according to claim 1, wherein the first and second magnetic elements (5, 6) are arranged relative to each other such that they overlap at least proportionally in the closed position.

3. The assembly according to any one of the preceding claims, in which the first and the second magnetic element (5, 6) assume a minimum spacing in the closed position, the second magnetic element (6) being guided on a circular path about the pivot axis (x) when the closure element (2) is pivoted from the closed position into the open position, so that the second magnetic element (6) has a maximum spacing from the first magnetic element (5) in the open position.

4. The assembly according to any one of the preceding claims, wherein the distance of the at least one first magnetic element (5) to the pivot axis (x) is much smaller than a dimension of the flaps (3, 3') perpendicular to the pivot axis (x), the distance preferably being less than one fifth and particularly preferably less than one tenth of the dimension of the flaps (3, 3').

5. The assembly according to any one of the preceding claims, wherein the web (4) has at least the first magnetic element (5) on opposite sides spaced from the pivot axis (x), respectively, wherein both flaps of the pair of flaps (3, 3') have at least one of the second magnetic elements (6), respectively.

6. The assembly according to claim 5, wherein the first magnetic elements (5) arranged on opposite sides of the web (4) spaced from the pivot axis (x) are further spaced from each other in the longitudinal direction of the web, preferably vertically spaced from each other.

7. The assembly according to any one of the preceding claims, in which the two flaps of the pair of flaps (3, 3') can be pivoted about a common pivot axis (x) or about separate, parallel spaced pivot axes (x).

8. The assembly according to any one of the preceding claims, in which the web (4) or the duct (1) has a stop (7) against which at least one of the flaps of the pair of flaps (3, 3') bears in the open position, so that the first and second magnetic elements (5, 6) are arranged at a predetermined distance from one another in the open position.

9. The assembly according to any one of the preceding claims, wherein the first and/or the second magnetic element (5, 6) comprises a permanent magnet or an electromagnet with adjustable magnetic field strength.

10. The assembly according to any one of the preceding claims, wherein the first and second magnetic elements (5, 6) each comprise a magnetic element having a magnetic field orientation, the two magnetic field orientations being substantially parallel to each other in the closed position, such that in the open position the magnetic field orientations include an angle corresponding to a displacement angle from the closed position to the open position.

11. The assembly according to one of the preceding claims, in which the web (4) has a fluid-dynamically optimized contour (8) on a first longitudinal side, which is flowed against when fluid flow is present, the pivot axis (x), about which the flaps (3, 3') can be pivoted, being arranged on a second longitudinal side, which is located opposite the first longitudinal side and lies in the flow shadow of the web (4).

12. The assembly according to any one of the preceding claims, wherein at least the first magnetic element (5) comprises an electromagnet with adjustable magnetic field strength, the assembly further comprising a measuring and control unit (9) which determines the volume flow through the duct (1) as a function of a magnetic force between the first and the second electromagnet (6) and a pressure loss caused by the closure element (2).

13. The assembly according to claim 12, in which the measuring and control unit (9) is designed to adjust the magnetic force and thus the actuating angle of the flaps (3, 3') by varying the magnetic field strength in such a way that a predetermined volume flow is established for a given pressure loss.

14. The assembly according to claim 12 or 13, wherein the measuring and control unit (9) is designed to determine the pressure loss from a first fluid pressure in the flow direction upstream of the at least one closure element (2) and a second fluid pressure in the flow direction downstream of the at least one closure element (2) by forming the difference.

## Revendications

1. Dispositif pour la régulation du débit volumique dans un canal d'air, dans lequel il existe un flux d'air généré par des appareils de ventilation ou autres, dans lequel le dispositif comprend un canal (1) et au moins un élément de fermeture (2) disposé dans le canal (1), dans lequel l'élément de fermeture (2) comprend au moins une paire de clapets (3, 3') qui est logée de manière pivotante autour d'un axe de pivotement (x) derrière une nervure (4) s'étendant à travers la section transversale du canal, dans la direction de l'écoulement du fluide à travers le canal (1), entre une position ouverte, dans laquelle il libère au moins partiellement la section transversale du canal et une position fermée, dans laquelle il ferme le canal (1), la nervure (4) comprend au moins un premier élément magnétique (5), dans lequel les clapets de la paire de clapets (3, 3') comprennent chacun au moins un deuxième élément magnétique (6), qui est couplé magnétiquement avec le premier élément magnétique (5).

2. Dispositif selon la revendication 1, dans lequel les premier et deuxième éléments magnétiques (5, 6) sont disposés l'un par rapport à l'autre de façon à ce qu'ils se superposent au moins partiellement dans la position fermée.

3. Dispositif selon l'une des revendications précédentes, dans lequel les premier et deuxième éléments magnétiques (5, 6) présentent entre eux, dans la position fermée, une distance minimale, dans lequel le deuxième élément magnétique (6) est guidé, lors du pivotement de l'élément de fermeture (2) de la position fermée vers la position ouverte sur une trajectoire circulaire autour de l'axe de pivotement (x), de façon à ce que le deuxième élément magnétique (6) présente, dans la position ouverte, une distance minimale par rapport au premier élément magnétique (5).

4. Dispositif selon l'une des revendications précédentes, dans lequel la distance entre l'au moins un premier élément magnétique (5) et l'axe de pivotement (x) est nettement inférieure à une dimension des clapets (3, 3') perpendiculairement à l'axe de pivotement (x), dans lequel la distance est de préférence inférieure à un cinquième et plus particulièrement de préférence inférieure à un dixième de la dimension des clapets (3, 3').

5. Dispositif selon l'une des revendications précédentes, dans lequel la nervure (4) présente, sur des côtés opposés, à une certaine distance de l'axe de pivotement (x) ; respectivement au moins le premier élément magnétique (5), dans lequel les deux clapets de la paire de clapets (3, 3') comprennent chacun au moins un des deuxièmes éléments magnétiques (6).

6. Dispositif selon la revendication 5, dans lequel les premiers éléments magnétiques (5), disposés sur des côtés opposés de la nervure (4), à une certaine distance de l'axe de pivotement (x), sont en outre distants entre eux dans la direction longitudinale de la nervure, de préférence distants entre eux verticalement.

7. Dispositif selon l'une des revendications précédentes, dans lequel les deux clapets de la paire de clapets (3, 3') peuvent pivoter autour d'un axe de pivotement (x) commun ou par l'intermédiaire d'axes de pivotement (x) séparés parallèles.

8. Dispositif selon l'une des revendications précédentes, dans lequel la nervure (4) ou le canal (1) comprend une butée (7) contre laquelle au moins un des clapets de la paire de clapets (3, 3') s'appuie dans la position ouverte, de façon à ce que les premier et deuxième éléments magnétiques (5, 6) sont disposés, dans la position ouverte, à une distance prédéterminée entre eux.

9. Dispositif selon l'une des revendications précédentes, dans lequel le premier et/ou le deuxième élément magnétique (5, 6) comprend un aimant permanent ou un électro-aimant avec une intensité de champ magnétique réglable.

10. Dispositif selon l'une des revendications précédentes, dans lequel les premier et deuxième éléments magnétiques (5, 6) comprennent chacun un élément magnétique avec une orientation du champ magnétique, dans lequel les deux orientations de champ magnétique sont orientées, dans la position fermée, de manière globalement parallèle entre elles, de façon à ce que les orientations du champ magnétique forment, dans la position ouverte, un angle correspondant à un angle de réglage de la position fermée vers la position ouverte.

11. Dispositif selon l'une des revendications précédentes, dans lequel la nervure (4) présente, sur un côté longitudinal, qui est parcouru dans le cas d'un écoulement de fluide, un contour optimisé en termes de dynamique des fluides (8), dans lequel l'axe de pivotement (x) autour duquel les clapets (3, 3') peuvent pivoter est disposé sur un deuxième côté longitudinal opposé au premier côté longitudinal, à l'abri de l'écoulement de la nervure (4).

12. Dispositif selon l'une des revendications précédentes, dans lequel au moins le premier élément magnétique (5) comprend un électro-aimant avec une intensité de champ magnétique réglable, dans lequel le dispositif comprend en outre une unité de mesure et de régulation (9) qui déterminée, en fonction d'une force magnétique entre les premier et deuxième électro-aimants (6) et une perte de pression provoquée par l'élément de fermeture (2), le débit volumique à travers le canal (1).

13. Dispositif selon la revendication 12, dans lequel l'unité de mesure et de régulation (9) est conçue pour régler, en faisant varier l'intensité du champ magnétique, la force magnétique et donc l'angle de réglage des clapets (3, 3') de façon à ce que, dans le cas d'une perte de pression donnée, un débit volumique prédéterminé soit réglé.

14. Dispositif selon la revendication 12 ou 13, dans lequel l'unité de mesure et de régulation (9) est conçue pour déterminer la perte de pression à partir d'une première pression de fluide avant l'au moins un élément de fermeture (2) dans la direction d'écoulement et d'une deuxième pression de fluide derrière l'au moins un élément de fermeture (2) dans la direction d'écoulement, par calcul de la différence.
